# EUROPÄISCHE PATENTSCHRIFT

(11) **EP 4 238 192 B1**
(45) Veröffentlichungstag und Bekanntmachung des Hinweises auf die Patenterteilung: **09.07.2025**
(21) Anmeldenummer: 21802290.3
(22) Anmeldetag: 28.10.2021
(51) Int. Cl.: H01R 43/28, H01R 43/052, H01R 103/00, H01R 43/05

(54) **VORRICHTUNG UND VERFAHREN ZUR MONTAGE EINES STECKVERBINDERS**
DEVICE AND METHOD FOR ASSEMBLING A PLUG CONNECTOR
DISPOSITIF ET PROCÉDÉ D'ASSEMBLAGE DE CONNECTEUR MÂLE

(30) Priorität: 29.10.2020 DE 102020128437
(43) Veröffentlichungstag der Anmeldung: 06.09.2023
(73) Patentinhaber: Metzner Holding GmbH, 89079 Ulm (DE)
(72) Erfinder: SORG, Manfred, 89079 Ulm (DE); MAIER, Pascal, 89077 Ulm (DE)
(74) Vertreter: Lorenz, Matthias
(86) Internationale Anmeldenummer: PCT/EP2021/080015
(87) Internationale Veröffentlichungsnummer: WO 2022/090406

(56) Entgegenhaltungen:
- DE-A1- 2 938 310

## Beschreibung

Die vorliegende Anmeldung nimmt die Priorität der deutschen Patentanmeldung Nr. 10 2020 128 437.3 in Anspruch.

Die Erfindung betrifft eine Vorrichtung zur Montage eines Steckverbinders oder einer Steckverbinderkomponente auf einem vorderen Endabschnitt zumindest einer Leitung, aufweisend ein Halteelement zum Halten der Leitung an einem Halteabschnitt, gemäß dem Oberbegriff des Anspruchs 1.

Die Erfindung betrifft ferner ein Verfahren zur Montage eines Steckverbinders oder einer Steckverbinderkomponente auf einem vorderen Endabschnitt zumindest einer Leitung, wonach ein Halteelement die Leitung an einem Halteabschnitt hält, gemäß dem Oberbegriff des Anspruchs 15.

Die Beschreibung offenbart außerdem ein Computerprogrammprodukt mit Programmcodemitteln, um ein Verfahren zur Montage eines Steckverbinders durchzuführen.

Für die Montage eines Steckverbinders auf einer Leitung, insbesondere einem Kabelende eines Kabels, kann es vorgesehen sein, die Leitung auszurichten und/oder zu positionieren, die Leitung abzulängen, einzelne Leitungskomponenten für die Montage von Steckverbinderkomponenten vorzubereiten, beispielsweise abzuisolieren, die Steckverbinderkomponenten mit Leitungskomponenten zu verbinden und/oder zunächst lose auf die Leitung, beispielsweise den Kabelmantel eines Kabels oder einen Isolator eines Leiters, für den späteren Gebrauch aufzuschieben, und die Steckverbinderkomponenten miteinander zu verbinden, insbesondere im Rahmen der Endmontage des Steckverbinders.

Insofern im Rahmen der Erfindung von der Montage des Steckverbinders gesprochen wird kann damit ein einzelner Verfahrensschritt oder können mehrere bis alle Verfahrensschritte gemeint sein, die während der Montage eines Steckverbinders auf einer Leitung in der Regel vorgesehen sein können.

Bei einem Steckverbinder kann es sich um einen Stecker, einen Einbaustecker, eine Buchse, eine Kupplung oder einen Adapter handeln. Die im Rahmen der Erfindung verwendete Bezeichnung "Steckverbinder" steht stellvertretend für alle Varianten.

Insbesondere an Steckverbinder für die Automobilindustrie bzw. für Fahrzeuge werden hohe Anforderungen an deren Robustheit und die Sicherheit der Steckverbindungen gestellt. Vor allem die Elektromobilität stellt die Automobilindustrie und deren Zulieferer vor große Herausforderungen, da in den Fahrzeugen über die Kabel und Leitungen mitunter hohe Ströme mit Spannungen bis zu 1.500 V übertragen werden. Bei der Gefahr, die ein Versagen von Bauteilen in einem Elektrofahrzeug zur Folge hätte, müssen demnach besonders hohe Anforderungen an die Qualität der Kabel bzw. Leitungen und Steckverbindungen gestellt werden.

So muss eine Steckverbindung mitunter hohen Belastungen, beispielsweise mechanischen Belastungen, standhalten sowie definiert geschlossen bleiben, so dass die elektrische Verbindung nicht unbeabsichtigt, beispielsweise während des Betriebs eines Fahrzeugs, getrennt wird.

Eine weitere Anforderung an Steckverbinder für die Automobilindustrie besteht darin, dass diese in hohen Stückzahlen wirtschaftlich herstellbar sein müssen. Eine möglichst vollautomatisierte Steckverbindermontage ist aus diesem Grunde insbesondere zur Herstellung von konfektionierten Kabeln bzw. Leitungen für die Automobilindustrie vorzuziehen. So müssen entsprechende Fertigungsstraßen etabliert werden, um die geforderten Stückzahlen bei gleichzeitig hoher Qualität zu erreichen.

Insbesondere wenn eine Leitung an einem ihrer Enden oder an beiden Enden mit einem Steckverbinder versehen werden soll, ist es in der Regel erforderlich, diverse Steckverbinderkomponenten auf die Leitung in der später benötigten Reihenfolge aufzuschieben, um diese für die Steckverbindermontage bereitzuhalten. Die zuvor aufgeschobenen Steckverbinderkomponenten können dann nacheinander oder gleichzeitig auf dem Mantel der Leitung in Richtung auf das vordere, freie Ende der Leitung bewegt werden, beispielsweise um mit einem korrespondierenden Steckverbinderbauteil zusammengefügt zu werden. Aufwändig gestaltet sich insbesondere der Transport der vorbestückten Leitung im Rahmen einer automatischen Steckverbindermontage.

Abhängig von dem jeweiligen Steckverbindertyp kann vorgesehen sein, eine einzige Leitung oder mehrere Leitungen mit dem Steckverbinder zu verbinden. Es kann somit insbesondere ein gemeinsamer Steckverbinder für mehrere Leitungen, beispielsweise für zwei Leitungen, vorgesehen sein. Die Leitungen werden dabei in der Regel parallel bzw. nebeneinander in den gemeinsamen Steckverbinder eingeführt und weisen dieselbe Länge oder zumindest annähernd dieselbe Länge auf. Aufgrund der eng benachbart verlaufenden Leitungen gestaltet sich die einzelne Leitungsbearbeitung (mitunter auch als "Vorkonfektionierung" bezeichnet) als äußerst schwierig, insbesondere im Rahmen einer automatisierten oder teilautomatisierten Montage. Die Bearbeitbarkeit der einzelnen Leitungen, beispielsweise für einen Abisolier- oder Crimpvorgang ist nicht ohne Weiteres gewährleistet, da die benachbarte Leitung die Zugänglichkeit erschweren kann.

Zum technischen Hintergrund sei an dieser Stelle noch auf die DE 29 38 310 A1 verwiesen, die ein Verfahren zur maschinellen Bearbeitung eines Kabels mit mindestens einer von Isolation umgebenen Litzenader betrifft.

In Anbetracht des bekannten Stands der Technik besteht die Aufgabe der vorliegenden Erfindung darin, eine Vorrichtung zur Montage eines Steckverbinders auf einem vorderen Endabschnitt einer Leitung bereitzustellen, die sich insbesondere im Rahmen einer automatisierten oder teilautomatisierten Steckverbindermontage vorteilhaft eignet.

Der vorliegenden Erfindung liegt auch die Aufgabe zugrunde, ein Verfahren zur Montage eines Steckverbinders auf einem vorderen Endabschnitt einer Leitung bereitzustellen, das sich insbesondere im Rahmen einer automatisierten oder teilautomatisierten Steckverbindermontage vorteilhaft eignet.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Es ist eine Vorrichtung zur Montage eines Steckverbinders (oder zumindest einer Steckverbinderkomponente) auf einem vorderen Endabschnitt zumindest einer Leitung vorgesehen.

Es kann im Rahmen der Erfindung vorgesehen sein, den Steckverbinder auf genau einer einzigen Leitung zu montieren. Vorzugsweise ist allerdings vorgesehen, den Steckverbinder auf mehreren Leitungen, vorzugsweise auf genau zwei Leitungen, beispielsweise aber auch auf genau drei Leitungen, genau vier Leitungen, genau fünf Leitungen, genau sechs Leitungen, oder noch mehr Leitungen zu montieren. Nachfolgend wird eine der genannten Leitungen als "erste Leitung" und eine weitere der Leitungen als "zweite Leitung" bezeichnet.

Die jeweiligen Leitungen können im Rahmen der Steckverbindermontage nacheinander oder gleichzeitig bearbeitet werden. Vorzugsweise werden die Leitungen allerdings nacheinander bearbeitet, besonders bevorzugt von denselben Bearbeitungswerkzeugen und/oder Bearbeitungsmodulen.

Sofern nachfolgend von "der" Leitung oder von "einer" Leitung gesprochen wird (oder von der "ersten" oder "zweiten" Leitung) so ist dies nicht einschränkend zu verstehen, sondern soll lediglich der besseren Lesbarkeit dienen. Grundsätzlich können sich alle nachfolgend beschriebenen Weiterbildungen und Varianten der Erfindung auf genau eine Leitung, auf genau zwei Leitungen oder auf noch mehr Leitungen beziehen, auch wenn dies nicht explizit angegeben ist. Insbesondere können sich Merkmale und Varianten, die sich auf die erste Leitung beziehen auch auf die zweite Leitung beziehen - und umgekehrt.

Vorzugsweise ist die Leitung als elektrische Leitung, insbesondere als elektrisches Kabel oder als elektrischer Leiter (beispielsweise Innenleiter eines elektrischen Kabels) ausgebildet. Die Leitung kann aber auch als optische Leitung oder als optisch/elektrische Hybridleitung ausgebildet sein. Ganz besonders bevorzugt ist die Leitung als Hochvoltkabel ausgebildet.

Nachfolgend ist die Erfindung im Wesentlichen zur Verwendung mit einer als elektrisches Kabel ausgebildeten Leitung beschrieben - dies ist allerdings nicht einschränkend zu verstehen.

Vorzugsweise ist der Steckverbinder als elektrischer Steckverbinder ausgebildet. Der Steckverbinder kann beispielsweise aber auch als optischer Steckverbinder oder als optisch/elektrischer Steckverbinder ausgebildet sein. Ganz besonders bevorzugt ist der Steckverbinder als Hochvolt-Steckverbinder ausgebildet.

Die Leitung und/oder der Steckverbinder können im Rahmen der Erfindung als Teil der Vorrichtung betrachtet werden. Die Leitung und/oder der Steckverbinder können gegebenenfalls aber auch unabhängig von der Vorrichtung sein.

Insbesondere kann im Rahmen der Erfindung ein beliebiges elektrisches Kabel in einem beliebigen elektrischen Steckverbinder montiert werden. Vorzugsweise weist das elektrische Kabel genau einen Außenleiter auf bzw. ist als geschirmtes elektrisches Kabel ausgebildet. Besonders vorteilhaft eignet sich die Erfindung zur Bearbeitung von elektrischen Kabeln mit großem Querschnitt für eine hohe Stromübertragung, beispielsweise im Fahrzeugbereich, besonders bevorzugt im Bereich der Elektromobilität. Es kann somit ein elektrisches Kabel für den Hochvoltbereich vorgesehen sein, insbesondere eine Hochvoltleitung.

Das elektrische Kabel kann eine beliebige Anzahl Innenleiter aufweisen, vorzugsweise jedoch nur einen einzigen Innenleiter. Es können aber auch zwei Innenleiter oder mehr Innenleiter, drei Innenleiter oder mehr Innenleiter, vier Innenleiter oder noch mehr Innenleiter vorgesehen sein.

Besonders bevorzugt ist das elektrische Kabel als Koaxialkabel mit genau einem Innenleiter und genau einem Außenleiter ausgebildet.

Insbesondere kann die Erfindung für eine automatisierte oder vollautomatisierte Montage des elektrischen Steckverbinders vorgesehen sein.

Die Vorrichtung weist zumindest ein erstes Halteelement zum Halten der ersten Leitung an einem Halteabschnitt auf.

Vorzugsweise weist die Vorrichtung pro Leitung genau ein Halteelement auf, so beispielsweise das nachfolgend noch genannte zweite Halteelement zum Halten der zweiten Leitung.

Sofern nachfolgend von "dem" Halteelement oder von "einem" Halteelement gesprochen wird (oder von dem "ersten" oder "zweiten" Halteelement) so ist dies nicht einschränkend zu verstehen, sondern soll lediglich der besseren Lesbarkeit dienen. Insbesondere können sich Merkmale und Varianten, die sich auf das erste Halteelement beziehen auch auf das zweite Halteelement beziehen - und umgekehrt.

Der genannte Halteabschnitt der Leitung ist dem vorderen Endabschnitt entlang der Längsachse der Leitung in Richtung auf ein hinteres Leitungsende nachgeordnet.

Der Halteabschnitt ist also von dem vorderen Leitungsende beabstandet und befindet sich vorzugsweise außerhalb des Bearbeitungsbereichs des vorderen Endabschnitts der Leitung.

Erfindungsgemäß ist das erste Halteelement ausgebildet, um den vorderen Endabschnitt der ersten Leitung zu verschwenken.

In vorteilhafter Weise kann das Halteelement dazu verwendet werden, den vorderen Endabschnitt der Leitung zu verschwenken, um die Zugänglichkeit für die Bearbeitung im Rahmen der Montage des Steckverbinders zu verbessern oder überhaupt erst zu ermöglichen. Beispielsweise kann hierdurch der vordere Endabschnitt der Leitung für ein Abisolierwerkzeug oder für ein Crimpwerkzeug zum Vercrimpen eines Kontaktelements mit der Leitung besonders gut zugänglich gemacht werden.

Insbesondere kann im Rahmen der Erfindung der vordere Endabschnitt eines elektrischen Kabels oder der vordere Endabschnitt eines elektrischen Leiters, beispielsweise eines Innenleiters eines elektrischen Kabels, verschwenkt werden.

Wenn die Erfindung zur Montage eines Steckverbinder auf genau einer Leitung vorgesehen ist, kann der vordere Endabschnitt der Leitung durch das Verschwenken an ein Bearbeitungswerkzeug oder an ein Bearbeitungsmodul zugestellt werden. Es kann dann beispielsweise auch vorgesehen sein, dass sich verschiedene Bearbeitungswerkzeug bzw. Bearbeitungsmodule (z. B. zwei, drei, vier oder noch mehr Bearbeitungswerkzeuge bzw. Bearbeitungsmodule) an verschiedenen Winkelpositionen entlang des Schwenkbereichs befinden. Die Leitung kann dann durch die Schwenkbewegung nacheinander an die verschiedenen Bearbeitungsmodule bzw. Bearbeitungswerkzeuge zugestellt werden.

Ganz besonders vorteilhaft eignet sich die Erfindung allerdings, wenn mehrere Leitungen in einem gemeinsamen Steckverbinder oder einer gemeinsamen Steckverbinderkomponente montiert werden. In diesem Fall kann die Zugänglichkeit der einzelnen Leitungen für die Bearbeitung durch das Verschwenken der Leitungen deutlich verbessert oder überhaupt erst ermöglich werden, beispielsweise indem immer einer der Leitungen von der anderen Leitung oder den anderen Leitungen weggeschwenkt wird.

Erfindungsgemäß ist vorgesehen, dass die Vorrichtung ein zweites Halteelement zum Halten einer zweiten Leitung an einem Halteabschnitt aufweist, der dem vorderen Endabschnitt entlang der Längsachse der zweiten Leitung in Richtung auf ein hinteres Leitungsende nachgeordnet ist.

Das zweite Halteelement ist ausgebildet, um den vorderen Endabschnitt der zweiten Leitung zu verschwenken.

Erfindungsgemäß kann abwechselnd immer genau eine der beiden Leitungen verschwenkbar sein, während die andere Leitung nicht verschwenkt ist. Hierdurch kann die Zugänglichkeit der verschwenkten und der nicht verschwenkten Leitung verbessert sein. Gegebenenfalls können erfindungsgemäß auch beide Leitungen in entgegengesetzte Richtungen verschwenkt werden, um den Abstand der Leitungen weiter zu erhöhen.

Auf diese Weise kann eine vorteilhafte Kabelbearbeitung durch dieselben Bearbeitungswerkzeuge oder Bearbeitungsmodule sequenziell erfolgen. Auch eine gleichzeitige Bearbeitung mehrerer Leitungen kann allerdings ermöglicht werden.

Die Vorrichtung kann auch noch weitere Halteelemente zum Halten weiterer Leitungen an einem entsprechenden Halteabschnitt aufweisen, die optional ebenfalls verschwenkbar ausgebildet sein können. Beispielsweise können ein drittes Halteelement zum Halten einer dritten Leitung, ein viertes Halteelement zum Halten einer vierten Leitung, ein fünftes Halteelement zum Halten einer fünften Leitung, ein sechstes Halteelement zum Halten einer sechsten Leitung oder noch mehr Halteelemente und Leitungen vorgesehen sein.

Die Erfindung ist zur Vereinfachung nachfolgend im Wesentlichen anhand der Verwendung von genau zwei Leitungen und genau zwei Halteelementen beschrieben. Dabei handelt es sich um ein bevorzugtes Ausführungsbeispiel, das allerdings nicht einschränkend zu verstehen ist.

In einer vorteilhaften Weiterbildung der Erfindung kann vorgesehen sein, dass das erste Halteelement und/oder das zweite Halteelement eine jeweilige Leitungsaufnahme aufweisen die ausgebildet ist, um die entsprechende Leitung formschlüssig und/oder kraftschlüssig an einem Mantel zu fixieren.

Beispielsweise kann eine U-förmige Leitungsaufnahme vorgesehen sein, optional eine U-förmige Leitungsaufnahme mit wenigstens einer Hinterschneidung oder wenigstens einem Vorsprung im Bereich der oberen, freien Enden der Schenkel, um ein Einschnappen der Leitung zu ermöglichen, wenn diese in die Leitungsaufnahme gedrückt wird. Die Schenkel der U-förmigen Leitungsaufnahme können entsprechend elastisch ausgebildet sein.

Alternativ kann beispielsweise auch eine Leitungsaufnahme mit zwei Klemmbacken oder eine sonstige Leitungsaufnahme vorgesehen sein.

Gemäß einer Weiterbildung der Erfindung kann vorgesehen sein, dass das erste Halteelement und/oder das zweite Halteelement zum Aufnehmen der Leitung auf die Leitung zustellbar und zum Freigeben der Leitung von der Leitung wegbewegbar sind.

Vorzugsweise sind die Halteelemente orthogonal auf die Längsachse der Leitung zustellbar.

Es kann auch vorgesehen sein, dass die Leitung in Richtung auf das jeweilige Halteelement zustellbar ist (alternativ oder zusätzlich zu einer Zustellbarkeit des jeweiligen Halteelements).

Gemäß einer Weiterbildung kann vorgesehen sein, dass die Leitungsaufnahme an einem ersten Ende wenigstens eines Führungsstiftes befestigt ist, der relativ zu der Längsachse der Leitung (vorzugsweise orthogonal) verschiebbar ist.

Für eine verbesserte Stabilität können mehrere Führungsstifte pro Leitungsaufnahme vorgesehen sein, beispielsweise genau zwei Führungsstifte.

Ein Führungsstift kann einen runden, rechteckigen oder sonstigen Querschnitt aufweisen.

Anstelle eines Führungsstifts oder zusätzlich zu einem Führungsstift kann die Leitungsaufnahme auch auf einem ersten Ende eines Führungsstegs befestigt sein, der relativ zu der Längsachse der Leitung (vorzugsweise orthogonal) verschiebbar ist.

In einer Weiterbildung kann vorgesehen sein, dass sich der Führungsstift (oder der Führungssteg) durch eine Ausnehmung einer Stützfläche erstreckt und in der Ausnehmung linear verschiebbar ist.

Vorzugsweise ist die Ausnehmung als Durchgangsbohrung ausgebildet und erstreckt sich vollständig durch das die Stützfläche definierende Bauteil. Auch eine Sacklochbohrung kann allerdings vorgesehen sein.

In einer Weiterbildung kann vorgesehen sein, dass zwischen der Stützfläche und der Leitungsaufnahme eine Druckfeder angeordnet ist (vorzugsweise um den Führungsstift umlaufend), um die Leitungsaufnahme in einem unbeeinflussten Grundzustand zum Aufnehmen der Leitung an die Leitung zuzustellen, wobei die Leitungsaufnahme zusammen mit dem Führungsstift zum Freigeben der Leitung entgegen der Federkraft der Druckfeder verschiebbar ist.

Um die Leitungsaufnahme von der Leitung zu entfernen, kann beispielsweise ein Stempel eines Aktors gegen die Leitungsaufnahme gedrückt werden (alternativ kann der Aktor auch an der Leitungsaufnahme ziehen), um die Leitungsaufnahme entgegen der Federkraft der Druckfeder auszulenken. Bei dem Aktor kann es sich beispielsweise um einen elektrisch, pneumatisch oder hydraulisch angetriebenen Aktor handeln. Wenn die Leitungsaufnahme von dem Aktor unbeeinflusst ist, kann die Rückstellkraft der Druckfeder dazu führen, dass die Leitungsaufnahme wieder an ihre Halteposition für die Leitung zugestellt wird.

Auch eine umgekehrte Ausführung ist selbstverständlich möglich, wonach zwischen der Stützfläche und der Leitungsaufnahme eine Zugfeder angeordnete ist, um die Leitungsaufnahme in einem unbeeinflussten Grundzustand zum Freigeben der Leitung von der Leitung zu entfernen.

In einer vorteilhaften Weiterbildung der Erfindung kann vorgesehen sein, dass das erste Halteelement und/oder das zweite Halteelement ausgebildet sind, um den vorderen Endabschnitt in einem Winkelbereich zwischen 0° (nicht verschwenkter Zustand) und 120° zu verschwenken, vorzugsweise in einem Winkelbereich zwischen 20° und 100° zu verschwenken, besonders bevorzugt in einem Winkelbereich zwischen 45° und 90° zu verschwenken.

Es kann optional ein spezifischer Schwenkwinkel innerhalb des Winkelbereichs vorgebbar sein. Das Verschwenken muss demnach nicht unbedingt ausschließlich zwischen einem nicht verschwenkten Zustand und einem vollständig verschwenkten Zustand erfolgen.

Beispielsweise kann auch vorgesehen sein, dass das jeweilige Halteelement die Leitung nacheinander an verschiedene Schwenkwinkelpositionen zustellt, um beispielsweise verschiedene Bearbeitungswerkzeug oder Bearbeitungsmodule zu erreichen.

In einer Weiterbildung der Erfindung kann vorgesehen sein, dass das erste Halteelement und das zweite Halteelement ausgebildet sind, um die vorderen Endabschnitte in entgegengesetzte Richtungen zu verschwenken.

Insbesondere das Verschwenken der Leitungen in entgegengesetzte Richtungen (was nicht unbedingt gleichzeitig erfolgen muss) kann von Vorteil sein, um einen möglicherweise begrenzten Bearbeitungsplatz innerhalb der Vorrichtung besonders gut auszunutzen.

In einer vorteilhaften Weiterbildung der Erfindung kann vorgesehen sein, dass das erste Halteelement und/oder das zweite Halteelement um eine jeweilige Schwenkachse drehbar gelagert sind.

Vorzugsweise ist die Schwenkachse exzentrisch bzw. versetzt zu einer Mittelachse der Leitungsaufnahme des jeweiligen Halteelements angeordnet.

In einer vorteilhaften Weiterbildung der Erfindung kann vorgesehen sein, dass das erste Halteelement und/oder das zweite Halteelement im Bereich eines ersten Endes eines jeweiligen Auslegers befestigt sind, wobei der Ausleger im Bereich eines zweiten Endes um die Schwenkachse drehbar gelagert ist.

Vorzugsweise kann der Ausleger die Stützfläche definieren, in der die Ausnehmung für den Führungsstift des jeweiligen Halteelements ausgebildet ist.

In einer vorteilhaften Weiterbildung kann vorgesehen sein, dass der Ausleger einen Betätigungsstift aufweist der ausgebildet ist, um den Ausleger und damit das jeweilige Halteelement um die Schwenkachse zu verschwenken.

Der Betätigungsstift ist vorzugsweise durch eine Stützplatte hindurchgeführt. Die Stützplatte kann unmittelbar an den Ausleger angrenzen bzw. der Ausleger kann auf der Stützplatte angeordnet und von der Stützplatte geführt sein.

Gemäß einer ersten Variante kann der Betätigungsstift koaxial zu der Schwenkachse angeordnet sein. Der Betätigungsstift kann dann beispielsweise von der Unterseite der Stützplatte betätigt bzw. gedreht werden, um den Ausleger auf der Stützplatte zu verschwenken.

Gemäß einer bevorzugten zweiten Variante kann der Betätigungsstift aber auch axial zu der Schwenkachse versetzt angeordnet sein. Der Betätigungsstift ist in diesem Fall vorzugsweise in einer Kulisse aufgenommen, mittels der der Betätigungsstift zumindest entlang eines Winkelabschnitts um die Schwenkachse herum zwangsgeführt ist. Die Kulisse kann insbesondere als Ausnehmung in der Stützplatte ausgebildet sein, in der der Betätigungsstift in der Art eines Kulissensteins geführt wird. Vorzugsweise beschreibt die Kulisse eine Kreisbahn bzw. einen Kreisbogen um die Schwenkachse herum, wobei der Mittelpunkt des Kreisbogens vorzugsweise auf der Schwenkachse angeordnet ist.

Es können auch noch andere Anordnungen für den Betätigungsstift vorgesehen sein. Die vorstehend genannten zwei Varianten sind nicht abschließend zu verstehen.

In einer Weiterbildung der Erfindung kann vorgesehen sein, dass die Vorrichtung zumindest eine Aktoreinheit aufweist die ausgebildet ist, um das erste Halteelement und/oder das zweite Halteelement (insbesondere deren jeweilige Leitungsaufnahme) zu verschwenken, vorzugsweise mittels des Betätigungsstiftes des Auslegers.

Die Aktoreinheit kann vorzugsweise als Elektromotor, pneumatischer Motor oder hydraulischer Motor ausgebildet sein.

In einer Weiterbildung kann vorgesehen sein, dass die Aktoreinheit ausgebildet ist, um eine Drehbewegung in den koaxial zu der Schwenkachse angeordneten Betätigungsstift einzuleiten.

Vorzugsweise weist der koaxial angeordnete Betätigungsstift einen rechteckigen oder einen sonstigen nicht runden Querschnitt auf. Die Aktoreinheit kann dann eine Verdrehung über den Betätigungsstift besonders vorteilhaft einleiten.

In einer Weiterbildung kann außerdem vorgesehen sein, dass die Aktoreinheit ausgebildet ist, um den axial zu der Schwenkachse versetzt angeordneten Betätigungsstift linear zu verschieben, um den Betätigungsstift innerhalb der Kulisse zu bewegen.

Vorzugsweise weist der axial versetzt angeordnete Betätigungsstift einen runden Querschnitt auf, um eine besonders reibungsarme Führung innerhalb der Kulisse zu ermöglichen.

Vorzugsweise weist die Aktoreinheit einen Transportschieber auf der ausgebildet ist, um den Betätigungsstift für das Verschieben des Betätigungsstiftes vorübergehend aufzunehmen.

Der Betätigungsstift kann optional an seinem in der Kulisse und/oder in dem Transportschieber geführten axialen Abschnitt eine oder mehrere Rollen aufweisen, um sich besonders reibungsarm verschieben zu lassen.

In einer Weiterbildung der Erfindung kann vorgesehen sein, dass die Vorrichtung eine Fixiereinheit zum Fixieren der zumindest einen Leitung an einem Fixierabschnitt aufweist. Der Fixierabschnitt ist dem Halteabschnitt entlang der Längsachse der Leitung in Richtung auf das hintere Leitungsende vorzugsweise nachgeordnet.

Vorzugsweise kann die Fixiereinheit ausgebildet sein, um alle Leitungen gleichzeitig zu fixieren. Die Fixiereinheit kann grundsätzlich allerdings auch ausgebildet sein, um eine jeweilige Leitung einzeln zu fixieren.

Die Fixiereinheit kann manuell und/oder automatisch betätigbar sein.

Die Fixiereinheit kann rein mechanisch ausgebildet sein.

In einer bevorzugten Weiterbildung der Erfindung kann allerdings vorgesehen sein, dass die Fixiereinheit als pneumatische Fixiereinheit ausgebildet ist, wobei die Fixiereinheit die Leitung(en) in einem druckluftfreien Zustand fixiert und in einem mit Druckluft beaufschlagten Zustand freigibt. Auf diese Weise kann insbesondere eine automatische Leitungsfixierung bereitgestellt werden.

Vorzugsweise ist die Fixiereinheit ausgebildet, um die Leitung(en) ausschließlich an definierten Bearbeitungsplätzen zur Eingabe und Entnahme der Leitungen freizugeben. Auf diese Weise kann sichergestellt sein, dass ein Mitarbeiter der Produktion eine Leitung während der Bearbeitung nicht aus der Vorrichtung entnimmt. Dies kann insbesondere aus Gründen der Prozesssicherheit, Bedienerfreundlichkeit und/oder Manipulationssicherheit von Vorteil sein.

In einer vorteilhaften Weiterbildung kann eine Druckluftankopplungseinheit vorgesehen sein die ausgebildet ist, um der Fixiereinheit ausschließlich an Bearbeitungsplätzen zur Eingabe und Entnahme der Leitungen Druckluft zuzuführen.

In einer Weiterbildung kann die Druckluftankopplungseinheit wenigstens einen Schwenkarm aufweisen der eingerichtet ist, um einen an dem Schwenkarm angeordneten ersten Druckluftverbinder in einen korrespondierenden zweiten Druckluftverbinder einzuführen, der mit der Fixiereinheit pneumatisch verbunden ist.

Vorzugsweise sind genau zwei Schwenkarme vorgesehen, um zwei erste Druckluftverbinder von gegenüberliegenden Seiten in einen gemeinsamen zweiten Druckluftverbinder einzuführen.

Vorzugsweise weist der erste Druckluftverbinder oder der zweite Druckluftverbinder einen Fangtrichter und der jeweils andere Druckluftverbinder einen Konus auf, um ein Zusammenführen der Druckluftverbinder zu vereinfachen.

In einer Weiterbildung der Erfindung kann außerdem vorgesehen sein, dass die Vorrichtung wenigstens ein Anschlagelement aufweist, das entlang der zumindest einen Leitung an einer dem Anschlagelement zugeordneten Anschlagposition angeordnet ist, um den Verschiebeweg von Steckverbinderkomponenten auf der Leitung formschlüssig zu blockieren. Vorzugsweise ist die Anschlagposition dem Halteabschnitt entlang der Längsachse der zumindest einen Leitung in Richtung auf das hintere Leitungsende nachgeordnet.

Die Anschlagelemente können insbesondere als Stifte oder Stege auf dem nachfolgend noch beschriebenen Leitungsträger ausgebildet sein.

Die Anschlagelemente können manuell oder maschinell / automatisch flexibel positionierbar sein, um bedarfsweise verschiedene axiale Positionen einzunehmen. Die Anschlagelemente können frei oder in einem vorgegebenen Raster positionierbar sein.

Die Anschlagelemente können äquidistant positioniert sein.

Bei den Steckverbinderkomponenten kann es sich um beliebige Komponenten des zu montierenden Steckverbinders handeln, die vorzugsweise eine Durchgangsbohrung zur Aufnahme einer oder mehrerer Leitungen aufweisen. Die Steckverbinderkomponenten können somit auf die Leitung(en), insbesondere auf einen Mantel der Leitung(en), aufschiebbar sein. Der Durchmesser der Durchgangsbohrungen kann dabei im Wesentlichen dem Durchmesser der Leitung bzw. deren Mantel entsprechen. Der Durchmesser der Durchgangsbohrung kann allerdings auch größer oder geringfügig kleiner sein als der Durchmesser der Leitung bzw. deren Mantel, um das mechanische Spiel einer auf der Leitung aufgeschobenen Steckverbinderkomponente beeinflussen zu können.

Grundsätzlich kann die Leitung mit beliebigen Steckverbinderkomponenten bestückt werden, beispielsweise mit einer Schirmhülse, einem Steckverbindergehäuse, einem Kontaktteileträger, einem Kontaktelement, einer Presshülse (beispielsweise einer Crimphülse), einer Leitungsdichtung, einer Kabelfesthaltung, einer Haltekappe oder einer Winkelkappe.

Die Bestückung der Leitung mit den Steckverbinderkomponenten kann manuell, beispielsweise durch einen Mitarbeiter der Produktion, oder maschinell / automatisch erfolgen.

Mitunter sind die Steckverbinderkomponenten auf der Leitung lose bzw. axial verschiebbar, bis sie im Rahmen der Steckverbindermontage mit anderen Steckverbinderkomponenten zusammengefügt und schließlich auf der Leitung befestigt werden. Um zu vermeiden, dass sich Steckverbinderkomponenten nach der Bestückung im Rahmen der weiteren Bearbeitung und/oder im Rahmen des Transports unkontrolliert verschieben (z. B für die nachfolgende Bearbeitung zu nahe aneinanderrücken oder sogar ineinandergleiten) oder sogar von der Leitung abfallen, können sich die Anschlagelemente vorteilhaft eignen, um die axialen Positionen der Steckverbinderkomponenten zu sichern.

Es können auch Anschlagelemente vorgesehen sein, die aufgrund ihrer Anordnung, beispielsweise seitlich unmittelbar angrenzend an den Steckverbinderkomponenten, ein Verdrehen der Steckverbinderkomponenten auf der Leitung oder eine versehentliche falsche Montage von Steckverbinderkomponenten auf der Leitung zu verhindern vermögen.

In einer Weiterbildung kann vorgesehen sein, dass das wenigstens eine Anschlagelement zwischen der ersten Leitung und der zweiten Leitung angeordnet ist.

Die zwischen der ersten Leitung und der zweiten Leitung angeordneten Anschlagelemente können beispielsweise als Stift oder Steg ausgebildet sein.

Die Anschlagelemente können aber beispielsweise auch seitlich neben der jeweiligen Leitung oder den Leitungen positioniert sein. Beispielsweise können auch jeweils zwei an derselben axialen Position angeordnete Anschlagelemente, zwischen denen die zumindest eine Leitung verläuft, ein Anschlagelementepaar ausbilden.

Die Anschlagelemente können in Richtung auf die Längsachse des Kabels manuell oder maschinell / automatisch zustellbar sein. Die Anschlagelemente können beispielsweise entlang einer jeweiligen Führungsschiene in Richtung auf die Längsachse des Kabels verschiebbar sein oder durch entsprechende Bohrungen in dem nachfolgend noch genannten Leitungsträger geführt sein.

Gemäß einer Weiterbildung kann vorgesehen sein, dass zumindest eines der Anschlagelemente mit einem Betätigungselement mechanisch gekoppelt ist, um das zumindest eine Anschlagelement durch Betätigen des Betätigungselements aus dem Verschiebeweg der Steckverbinderkomponenten zu bewegen.

Die Betätigung des Betätigungselements kann manuell, beispielsweise durch einen Mitarbeiter der Produktion, oder maschinell / automatisiert erfolgen.

Die Anschlagelemente können einzeln betätigbar sein, beispielsweise durch ein jeweiliges Betätigungselement, oder aber auch in Kombination betätigbar sein, beispielsweise durch ein mit mehreren oder allen Anschlagelementen gekoppeltes Betätigungselement.

In einer vorteilhaften Ausgestaltung können Rastbolzen vorgesehen sein, die ausgebildet sind, um eines der Betätigungselemente oder um mehrere der Betätigungselemente in ihrem betätigten Zustand zu blockieren. Die Bestückung der Leitung mit den Steckverbinderkomponenten kann in diesem Fall besonders bedienerfreundlich erfolgen.

In einer Weiterbildung der Erfindung kann vorgesehen sein, dass die Vorrichtung eine Transporteinrichtung aufweist. Die Transporteinrichtung umfasst vorzugsweise einen Werkstückträger zum Transport der zumindest einen Leitung zwischen einzelnen Bearbeitungsmodulen und/oder Bearbeitungswerkzeugen (der Vorrichtung oder eines übergeordneten Systems) entlang einer Leitungstransportrichtung.

Die Transporteinrichtung kann beispielsweise als Fließbandsystem oder Linearaktuator ausgebildet sein, um einen oder mehrere Werkstückträger gemeinsam oder einzeln entlang der Leitungstransportrichtung zu bewegen. Auch eine Greifereinrichtung zum Transport der Werkstückträger kann vorgesehen sein und insbesondere auch eine Kombination verschiedener Transportverfahren.

Verschiedene Bearbeitungsschritte im Rahmen der Steckverbindermontage können optional auf mehrere Bearbeitungsmodule verteilt sein, um die Vorrichtung als "Fließbandprozess" bzw. als "Taktautomat" mit aufeinanderfolgenden Einzelschritten zu betreiben, um die Bearbeitungszeit bei einer Massenabfertigung zu reduzieren.

Die Transporteinrichtung kann die Leitungen in diesem Fall entsprechend getaktet zwischen den Bearbeitungsmodulen transportieren.

In einer vorteilhaften Weiterbildung der Erfindung kann vorgesehen sein, dass auf dem Werkstückträger ein Leitungsträger (vorzugsweise ein Kabelträger) befestigt ist, auf dem das erste Halteelement, das zweite Halteelement, die Fixiereinheit und/oder die Anschlagelemente angeordnet sind.

Der Leitungsträger kann auf dem Werkstückträger fest bzw. unbeweglich montiert sein. In diesem Fall kann vorgesehen sein, die Bearbeitungswerkzeuge und/oder Bearbeitungsmodule orthogonal oder zumindest im Wesentlichen orthogonal zu der Leitungstransportrichtung an den vorderen Endabschnitt der jeweiligen Leitung für die Bearbeitung zuzustellen. Für die Zustellung kann allerdings auch die Schwenkbewegung der Halteelemente vorgesehen sein.

In einer vorteilhaften Weiterbildung der Erfindung kann alternativ oder zusätzlich auch vorgesehen sein, dass der Leitungsträger auf dem Werkstückträger entlang einer Zustellrichtung bewegbar ist, um den vorderen Endabschnitt der zumindest einen Leitung für die Bearbeitung an wenigstens ein Bearbeitungswerkzeug und/oder ein Bearbeitungsmodul zuzustellen.

Bevorzugt ist allerdings die ausschließliche Zustellung der Bearbeitungswerkzeuge bzw. Bearbeitungsmodule.

In einer Ausgestaltung der Erfindung kann vorgesehen sein, dass der Leitungsträger, die Leitungen, der Werkstückträger, die Bearbeitungsmodule und/oder die Bearbeitungswerkzeuge einen Informationsträger aufweisen, beispielsweise einen RFID-Transponder, einen Strichcode, einen QR-Code oder eine sonstige Markierung, um den Leitungsträger, die Leitung, den Werkstückträger, die Bearbeitungsmodule und/oder die Bearbeitungswerkzeuge zu identifizieren, eine korrekte Position zu detektieren und/oder die Bearbeitung nachverfolgbar zu dokumentieren. Entsprechend können Schreib-/Lesegeräte innerhalb der Vorrichtung vorgesehen sein, um den Informationsträge auszulesen und/oder zu beschreiben.

Gemäß einer Weiterbildung der Erfindung kann vorgesehen sein, dass die Transporteinrichtung eine Führungsnut zur Führung des Betätigungsstiftes des ersten Halteelements und/oder des zweiten Halteelements aufweist. Alternativ oder zusätzlich kann vorgesehen sein, dass die Transporteinrichtung eine Führungsnut zur Führung eines separaten Transportstiftes des Auslegers des ersten Halteelements und/oder des zweiten Halteelements aufweist.

Vorzugsweise ist an zumindest einer Position entlang der Führungsnut eine der Aktoreinheiten zum Verschwenken des Auslegers angeordnet.

Die Erfindung betrifft auch ein Verfahren zur Montage eines Steckverbinders (oder einer Steckverbinderkomponente) auf einem vorderen Endabschnitt zumindest einer ersten Leitung, wonach ein erstes Halteelement die erste Leitung an einem Halteabschnitt hält, der dem vorderen Endabschnitt entlang der Längsachse der ersten Leitung in Richtung auf ein hinteres Leitungsende nachgeordnet ist. Es ist vorgesehen, dass das erste Halteelement den vorderen Endabschnitt der ersten Leitung bedarfsweise verschwenkt.

Die Steckverbindermontage kann durch das bedarfsweise Verschwenken des vorderen Endabschnitts der Leitung durch das Halteelement besonders flexibel möglich und insbesondere besonders einfach automatisierbar sein.

Erfindungsgemäß ist vorgesehen, dass ein zweites Halteelement eine zweite Leitung an einem Halteabschnitt hält, der dem vorderen Endabschnitt entlang der Längsachse der zweiten Leitung in Richtung auf ein hinteres Leitungsende nachgeordnet ist, wobei das zweite Halteelement den vorderen Endabschnitt der zweiten Leitung bedarfsweise verschwenkt.

Erfindungsgemäß verschwenkt wahlweise das erste Halteelement die erste Leitung oder das zweite Halteelement die zweite Leitung. Ein gleichzeitiges Verschwenken beider Leitungen ist im Rahmen der Erfindung grundsätzlich ebenfalls möglich, allerdings nicht unbedingt bevorzugt.

In einer vorteilhaften Weiterbildung der Erfindung kann insbesondere vorgesehen sein, dass das erste Halteelement den vorderen Endabschnitt der ersten Leitung in einem verschwenkten Zustand hält, während der vordere Endabschnitt der zweiten Leitung zur Montage des Steckverbinders (vorzugsweise in einem nicht verschwenkten Zustand) bearbeitet wird.

Entsprechend kann auch vorgesehen sein, dass das zweite Halteelement den vorderen Endabschnitt der zweiten Leitung in einem verschwenkten Zustand hält, während der vordere Endabschnitt der ersten Leitung zur Montage des Steckverbinders (vorzugsweise in einem nicht verschwenkten Zustand) bearbeitet wird.

In einer Weiterbildung der Erfindung kann insbesondere vorgesehen sein, dass das erste Halteelement den vorderen Endabschnitt der ersten Leitung in einem nicht verschwenkten Zustand hält, während der vordere Endabschnitt der ersten Leitung zur Montage des Steckverbinder bearbeitet wird.

Außerdem kann vorgesehen sein, dass das zweite Halteelement den vorderen Endabschnitt der zweiten Leitung in einem nicht verschwenkten Zustand hält, während der vordere Endabschnitt der zweiten Leitung zur Montage des Steckverbinders bearbeitet wird.

Die Erfindung betrifft auch ein Computerprogrammprodukt mit Programmcodemitteln, um ein Verfahren gemäß den vorstehenden und nachfolgenden Ausführungen durchzuführen, wenn das Programm auf einer Steuereinrichtung einer Vorrichtung zur Montage eines Steckverbinders ausgeführt wird (insbesondere auf einer Vorrichtung gemäß den vorstehenden und nachfolgenden Ausführungen).

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Merkmale, die im Zusammenhang mit einem der Gegenstände der Erfindung, namentlich gegeben durch die erfindungsgemäße Vorrichtung, das erfindungsgemäße Verfahren und das Computerprogrammprodukt beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Vorrichtung zur Montage eines Steckverbinders auf einem vorderen Endabschnitt zumindest einer Leitung, aufweisend wenigstens ein Anschlagelement, das entlang der zumindest einen Leitung an einer dem Anschlagelement zugeordneten Anschlagposition angeordnet ist, um den Verschiebeweg von Steckverbinderkomponenten auf der Leitung formschlüssig zu blockieren. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser Vorrichtung.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Vorrichtung zur Montage eines Steckverbinders auf einem vorderen Endabschnitt eines ersten elektrischen Kabels und eines zweiten elektrischen Kabels in einer Draufsicht;
- Figur 2: einen Werkstückträger und einen Leitungsträger der erfindungsgemäßen Vorrichtung der Figur 1 in einer perspektivischen Darstellung;
- Figur 3: die Halteelemente der erfindungsgemäßen Vorrichtung der Figur 1 in einer perspektivischen Einzeldarstellung in einem unbeeinflussten Zustand;
- Figur 4: die Halteelemente gemäß Figur 3, wobei eines der Halteelemente beispielhaft in einem ausgelenkten Zustand gezeigt ist;
- Figur 5: die Halteelemente gemäß Figur 3 in einer weiteren perspektivischen Darstellung;
- Figur 6: eine perspektivische Einzeldarstellung des Leitungsträgers der erfindungsgemäßen Vorrichtung der Figur 1 mit den Anschlagelementen;
- Figur 7: die Einzeldarstellung gemäß Figur 6 mit einem beispielhaft ausgelenkten Anschlagelement;
- Figur 8: einen Ausschnitt einer erfindungsgemäßen Vorrichtung gemäß einer bevorzugten Ausführungsform in einer perspektivischen Darstellung;
- Figur 9: die Druckluftankopplungseinheit der Vorrichtung gemäß Figur 8 in einer Seitenansicht;
- Figur 10: die Halteelemente der Vorrichtung der Figur 8 in einer perspektivischen Einzeldarstellung; und
- Figur 11: die Halteelemente der Figur 10 in einer noch weiter vereinzelten Darstellung.

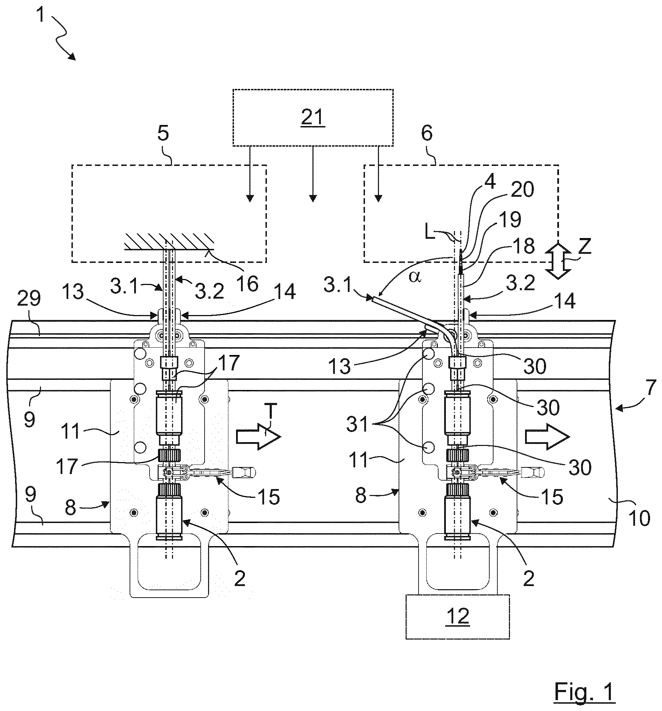

Figur 1 zeigt eine Vorrichtung 1 zur Montage eines Steckverbinders 2 auf zumindest einer Leitung 3.1, 3.2 gemäß einem Ausführungsbeispiel der Erfindung.

Lediglich beispielhaft ist die Vorrichtung 1 zur Verwendung mit zwei als elektrische Kabel 3.1, 3.2 ausgebildeten Leitungen beschrieben. Bei einer Leitung kann es sich allerdings grundsätzlich um eine beliebige Leitung handeln, beispielsweise auch um einen Innenleiter 4 eines Kabels 3.1, 3.2, um ein optisches Kabel oder um eine optische Faser. Ferner kann sich die Erfindung auch zur Verwendung mit nur einer einzigen Leitung oder zur Verwendung mit mehr als zwei Leitungen vorteilhaft eignen.

Auch der dargestellte elektrische Steckverbinder 2 ist lediglich beispielhaft zu verstehen.

Im Rahmen der Erfindung kann optional vorgesehen sein, an beiden Enden der zumindest einen Leitung 3.1, 3.2 einen Steckverbinder 2 anzubringen (ggf. auch Steckverbinder unterschiedlicher Bauart). In dem in Figur 1 dargestellten Bearbeitungszustand der Kabel 3.1, 3.2 ist beispielsweise bereits ein vollständig montierter Steckverbinder 2 auf den hinteren Leitungsenden der beiden Kabel 3.1, 3.2 dargestellt.

Die Vorrichtung 1 kann beliebige Montageschritte im Rahmen einer Steckverbindermontage durchführen. Beispielhaft sind zwei Bearbeitungsmodule 5, 6 der Vorrichtung 1 in Figur 1 dargestellt. Die Vorrichtung 1 kann allerdings auch Teil eines übergeordneten Systems zur Steckverbindermontage sein - die dargestellten Bearbeitungsmodule 5, 6 müssen demnach nicht unbedingt der Vorrichtung 1 zugeordnet werden.

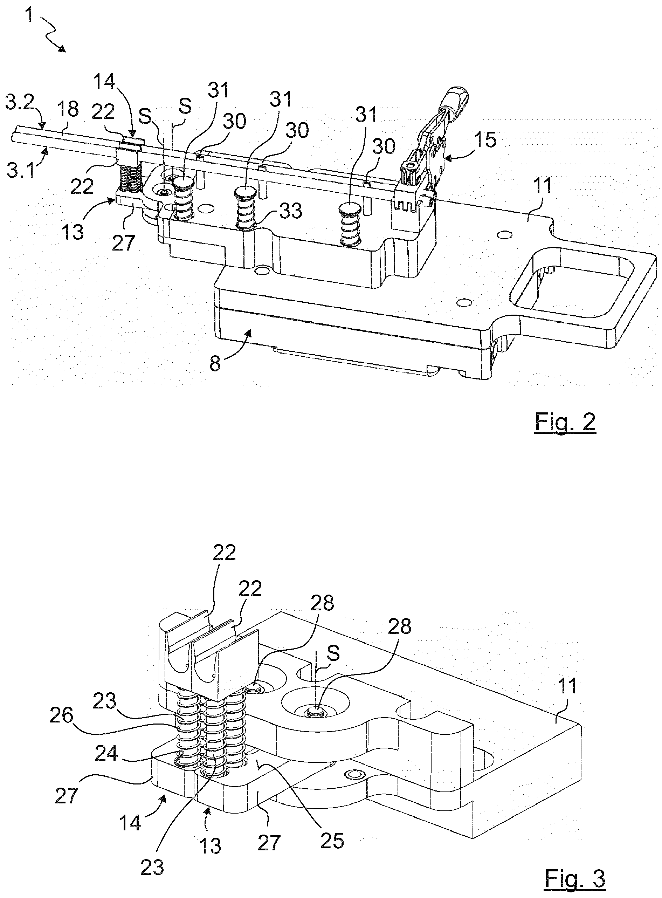

Zum Transport der Kabel 3.1, 3.2 zwischen den einzelnen Bearbeitungsmodulen 5, 6 bzw. Bearbeitungswerkzeugen kann eine Transporteinrichtung 7 vorgesehen sein, insbesondere eine Transporteinrichtung 7 mit einem Werkstückträger 8 (vgl. insbesondere Figur 2), der entlang einer Leitungstransportrichtung T bewegbar ist. In dem Ausführungsbeispiel sind die Werkstückträger 8 entlang zweier Schienen 9 eines Linearaktuators 10 geführt und sind vorzugsweise individuell entlang oder entgegen der Leitungstransportrichtung T bewegbar, beispielsweise durch einen Magnetantrieb. Rein beispielhaft sind zwei Werkstückträger 8 gezeigt.

Auf dem Werkstückträger 8 kann ein Leitungsträger 11 bzw. Kabelträger befestigt sein, auf dem die Kabel 3.1, 3.2 für den Transport und die Bearbeitung gehalten werden. Ein einzelner Werkstückträger 8 mit einem Leitungsträger 11 und einige mit dem Leitungsträger 11 verbundenen weiteren Komponenten der Vorrichtung 1 sind in einer Einzeldarstellung perspektivisch in Figur 2 gezeigt.

Ergänzend kann vorgesehen sein, dass der Leitungsträger 11 auf dem Werkstückträger 8 entlang einer Zustellrichtung Z bewegbar ist, beispielsweise unter Verwendung eines Schienensystems (nicht dargestellt), um die Kabel 3.1, 3.2 für die Bearbeitung an wenigstens eines der Bearbeitungswerkzeuge und/oder an wenigstens eines der Bearbeitungsmodule 5, 6 zuzustellen. Alternativ oder zusätzlich können aber auch die Bearbeitungswerkzeuge bzw. die Bearbeitungsmodule 5, 6 an die Kabel 3.1, 3.2 zustellbar sein, wie in Figur 1 angedeutet.

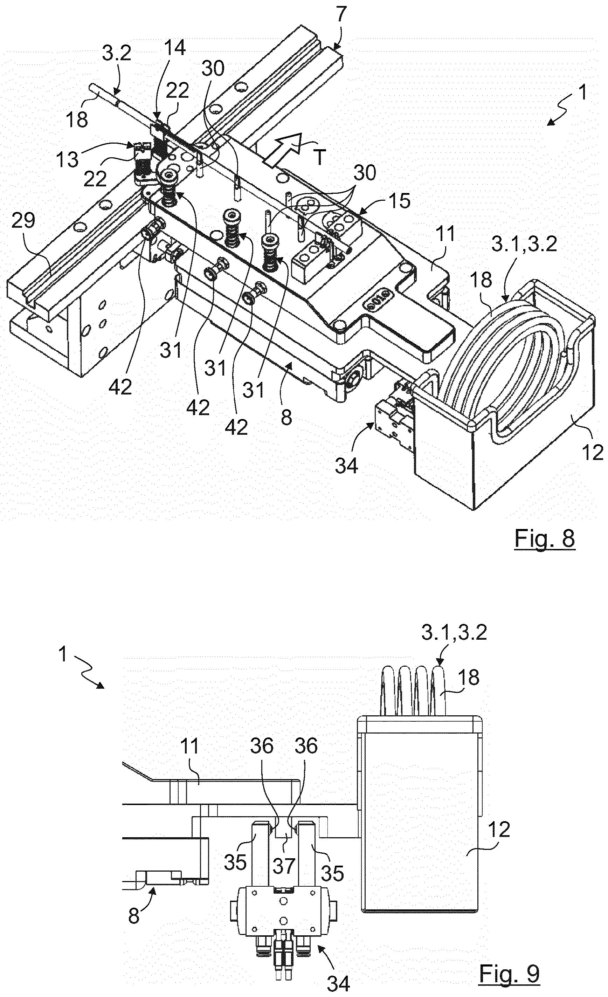

Für eine einfachere Handhabung längerer Kabel 3.1, 3.2 kann der Leitungsträger 11 optional eine Kabelaufnahme 12 aufweisen, in der der hintere Endabschnitt wenigstens eines der Kabel 3.1, 3.2 aufgewickelt aufgenommen sein kann (in Figur 1 strichliniert für den rechten Leitungsträger 11 angedeutet, vgl. auch die Figuren 8 und 9).

Die Vorrichtung 1 weist ein erstes Halteelement 13 zum Halten eines ersten Kabels 3.1 und ein zweites Halteelement 14 zum Halten eines zweiten Kabels 3.2 auf. Die Halteelemente 13, 14 sind auf dem Leitungsträger 11 befestigt und zunächst in den Figuren 3 bis 5 in einer Einzeldarstellung gezeigt.

Die Halteelemente 13, 14 halten die Kabel 3.1, 3.2 an einem Halteabschnitt, der dem vorderen Endabschnitt (an dem der Steckverbinder 2 montiert wird) entlang der Längsachse L des jeweiligen Kabels 3.1, 3.2 in Richtung auf das hintere Leitungs- bzw. Kabelende nachgeordnet ist. Die Bearbeitung der Kabel 3.1, 3.2 ist dadurch komfortabel in dem Abschnitt vor den jeweiligen Halteelementen 13, 14 möglich.

Für eine vorteilhafte Fixierung der Kabel 3.1, 3.2 an dem Leitungsträger 11 kann an dem Leitungsträger 11 außerdem eine Fixiereinheit 15 zum Fixieren des zumindest einen Kabels 3.1, 3.2 an einem Fixierabschnitt vorgesehen sein. Der Fixierabschnitt ist dem Halteabschnitt vorzugsweise entlang der Längsachse L des Kabels 3.1, 3.2 in Richtung auf das hintere Kabelende nachgeordnet. Vorzugsweise fixiert die Fixiereinheit 15 alle Kabel 3.1, 3.2 gemeinsam. Die Fixiereinheit 15 kann manuell und/oder maschinell betätigbar sein, um die Kabel 3.1, 3.2 wahlweise zu fixieren oder freizugeben. In dem Ausführungsbeispiel der Figuren 1 bis 7 ist eine manuelle Fixiereinheit 15 dargestellt.

Wie bereits erwähnt sind in Figur 1 beispielhaft zwei Bearbeitungsmodule 5, 6 der Vorrichtung 1 dargestellt.

Ein erstes Bearbeitungsmodul 5 kann beispielsweise zum Einlegen der Kabel 3.1, 3.2 ausgebildet sein und hierzu insbesondere einen Anschlag 16 oder eine Lichtschranke aufweisen, um einen Mitarbeiter der Produktion oder eine Einlegeeinrichtung beim Einlegen der Kabel 3.1, 3.2 zu unterstützen. Zuvor können auch bereits einzelne Steckverbinderkomponenten 17 auf die Kabel 3.1, 3.2 aufgeschoben werden. Die Kabel 3.1, 3.2 können im Rahmen der Bearbeitung durch das erste Bearbeitungsmodul 5 schließlich durch die Fixiereinheit 15 auf dem Leitungsträger 11 fixiert und in die Halteelemente 13, 14 eingesetzt werden.

Die auf dem Leitungsträger 11 befestigten Kabel 3.1, 3.2 können anschließend von der Transporteinrichtung 7 entlang der Leitungstransportrichtung T bis zu einem zweiten Bearbeitungsmodul 6 transportiert werden.

Das zweite Bearbeitungsmodul 6 kann beispielsweise eine Abisolierstation sein, um einen Kabelmantel 18 des Kabels 3.1, 3.2 im Bereich des vorderen Endabschnitts bis zu einer definierten Länge abzuisolieren und/oder um eine Kabelfolie (nicht dargestellt) zu entfernen und/oder um ein Kabelschirmgeflecht 19 abzulängen und gegebenenfalls umzulegen und/oder um eine mehrere Innenleiter 4 gemeinsam einhüllende Füllschicht (nicht dargestellt) bis zu einer vordefinierten Länge abzuisolieren und/oder um einen Isolator 20 eines Innenleiters 4 bis zu einer vorgegebenen Länge abzuisolieren.

Grundsätzlich können beliebige Bearbeitungsmodule im Rahmen der Montage des Steckverbinders 2 als Teil der Vorrichtung 1 oder einer zusätzlichen, weiteren Vorrichtung oder eines übergeordneten Systems vorgesehen sein.

Damit die Bearbeitung eines einzelnen Kabels 3.1, 3.2 vorteilhaft möglich ist und/oder zur Zustellung des vorderen Endabschnitts des Kabels 3.1, 3.2 an die Bearbeitungsmodule 5, 6 und/oder Bearbeitungswerkzeuge, sind die Halteelemente 13, 14 ausgebildet, um den vorderen Endabschnitt des jeweiligen Kabels 3.1, 3.2 zu verschwenken.

In Figur 1 ist beispielhaft eine Variante dargestellt, bei der das erste Halteelement 13 den vorderen Endabschnitt des ersten Kabels 3.1 in einem verschwenkten Zustand hält, während der vordere Endabschnitt des zweiten Kabels 3.2 für die Montage des Steckverbinders 2 bearbeitet (hier: abisoliert) wird. Nach der Bearbeitung des ersten Kabels 3.1 kann schließlich das zweite Kabel 3.2 bearbeitet werden, indem das zweite Halteelement 14 den vorderen Endabschnitt des zweiten Kabels 3.2 verschwenkt, während der vordere Endabschnitt des ersten Kabels 3.1 von dem ersten Halteelement 13 nicht verschwenkt gehalten wird.

Alternativ kann auch vorgesehen sein, dass das jeweils verschwenkte Kabel 3.1, 3.2 bearbeitet wird, während das nicht verschwenkte Kabel 3.1, 3.2 nicht bearbeitet wird. Ferner können auch beide Kabel 3.1, 3.2 verschwenkt und ggf. gleichzeitig bearbeitet werden.

Bevorzugt sind die Halteelemente 13, 14 ausgebildet, um die vorderen Endabschnitte der Kabel 3.1, 3.2 in entgegengesetzte Richtungen zu verschwenken.

Insbesondere können die Halteelemente 13, 14 ausgebildet sein, um den vorderen Endabschnitt in einem Winkelbereich zwischen 0° und 120°, vorzugsweise 20° bis 100°, besonders bevorzugt 45° bis 90°, zu verschwenken. Es kann insbesondere auch vorgesehen sein, dass durch die Halteelemente 13, 14 ein definierter Verschwenkwinkel α angesteuert wird.

Zur Durchführung des vorgeschlagenen Montageverfahrens kann ein Computerprogrammprodukt mit Programmcodemitteln vorgesehen sein, wobei das Programm auf einer Steuereinrichtung 21 der Vorrichtung 1 ausgeführt wird (in Figur 1 strichliniert dargestellt).

Die Halteelemente 13, 14 sollen nun anhand der Figuren 3 bis 5 noch detaillierter beschrieben werden.

Die Halteelemente 13, 14 weisen eine jeweilige Leitungsaufnahme 22 auf, die ausgebildet ist, um die entsprechende Leitung 3.1, 3.2 formschlüssig und/oder kraftschlüssig an ihrem Mantel, insbesondere dem Kabelmantel 18 oder dem Isolator 20, zu fixieren.

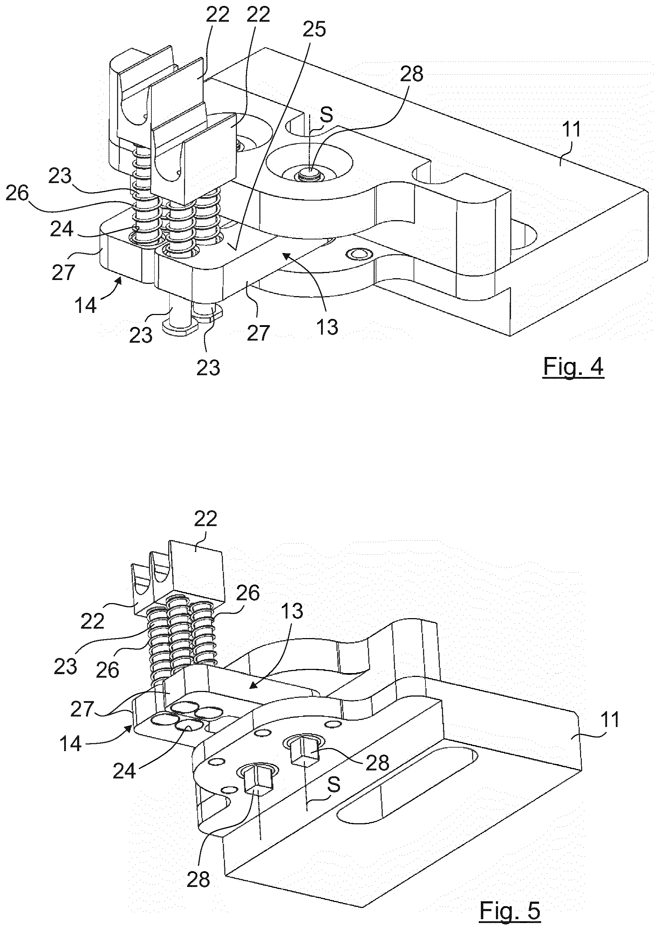

Die Halteelemente 13, 14 können zum Aufnehmen des Kabels 3.1, 3.2 an das Kabel 3.1, 3.2 zustellbar und zum Freigeben des Kabels 3.1, 3.2 von dem Kabel 3.1, 3.2 wegbewegbar sein. Beispielhaft ist in Figur 4 die Leitungsaufnahme 22 des zweiten Halteelements 14 in einem an das zweite Kabel 3.2 zugestellten Zustand und die Leitungsaufnahme 22 des ersten Halteelements 13 in einem von dem ersten Kabel 3.1 beabstandeten Zustand gezeigt.

Die Leitungsaufnahmen 22 sind an einem jeweiligen ersten Ende zweier Führungsstifte 23 befestigt und zusammen mit den Führungsstiften 23 orthogonal zu der Längsachse L des Kabels 3.1, 3.2 verschiebbar. Die Führungsstifte 23 erstrecken sich hierzu durch Ausnehmungen 24 in einer Stützfläche 25 und sind in der jeweiligen Ausnehmung 24 linear verschiebbar.

Zwischen der Stützfläche 25 und der Leitungsaufnahme 22 ist eine jeweilige Druckfeder 26 um den Führungsstift 23 umlaufend angeordnet, um die Leitungsaufnahme 22 in einem unbeeinflussten Grundzustand (vgl. Leitungsaufnahme 22 des zweiten Halteelements 14 in Figur 4) zum Aufnehmen des Kabels 3.1, 3.2 an das Kabel 3.1, 3.2 zuzustellen, wobei die Leitungsaufnahme 22 zusammen mit den Führungsstiften 23 zum Freigeben der Kabel 3.1, 3.2 entgegen der Federkraft der Druckfeder 26 verschiebbar ist (vgl. Leitungsaufnahme 22 des ersten Halteelements 13 in Figur 4).

Die Halteelemente 13, 14 sind um eine jeweilige Schwenkachse S drehbar gelagert. Hierzu sind die Halteelemente 13, 14 im Bereich eines ersten Endes eines jeweiligen Auslegers 27 befestigt, der im Bereich seines zweiten Endes um die Schwenkachse S drehbar gelagert ist.

Der Ausleger 27 ist mit einem Betätigungsstift 28 verbunden (vgl. insbesondere Figur 5), der koaxial zu der Schwenkachse S verläuft und ausgebildet ist, um den Ausleger 27 und damit das jeweilige Halteelement 13, 14 um die Schwenkachse S zu verschwenken. Hierzu kann zumindest eine Aktoreinheit vorgesehen sein (nicht dargestellt).

Die Betätigungsstifte 28 des Auslegers 27 können vorzugsweise in einer Führungsnut 29 (vgl. Figur 1) der Transporteinrichtung 7 geführt sein. An definierten Position entlang der Führungsnut 29 kann dann eine Aktoreinheit oder können mehrere Aktoreinheiten zum Verschwenken des Auslegers 27 angeordnet sein.

Wie bereits zuvor erläutert kann vorgesehen sein, diverse Steckverbinderkomponenten 17 auf die Leitungen 3.1, 3.2 aufzuschieben, beispielsweise auf den Kabelmantel 18 der jeweiligen Kabel 3.1, 3.2. Die Steckverbinderkomponenten 17 können insbesondere ausgebildet sein, um gleichzeitig auf beide Kabel 3.1, 3.2 aufgeschoben zu werden.

Um die Steckverbinderkomponenten 17 während der Montage des Steckverbinders 2 verliersicher und vorzugsweise an einer definierten Position auf den Leitungen 3.1, 3.2 zu halten, können Anschlagelemente 30 vorgesehen sein (vgl. insbesondere die Figuren 2, 6 und 7). Die Anschlagelemente 30 sind entlang der Kabel 3.1, 3.2 an jeweiligen Anschlagpositionen angeordnet, um den Verschiebeweg der Steckverbinderkomponenten 17 formschlüssig zu blockieren. Die Anschlagpositionen sind dem Halteabschnitt entlang der Längsachse L der Kabel 3.1, 3.2 in Richtung auf das hintere Leitungs- bzw. Kabelende nachgeordnet.

Besonders bevorzugt sind die Anschlagelemente 30 zwischen den beiden Kabeln 3.1, 3.2 angeordnet, wie in Figur 2 gut erkennbar. Die Anschlagelemente 30 sind vorzugsweise auf dem Leitungsträger 11 befestigt.

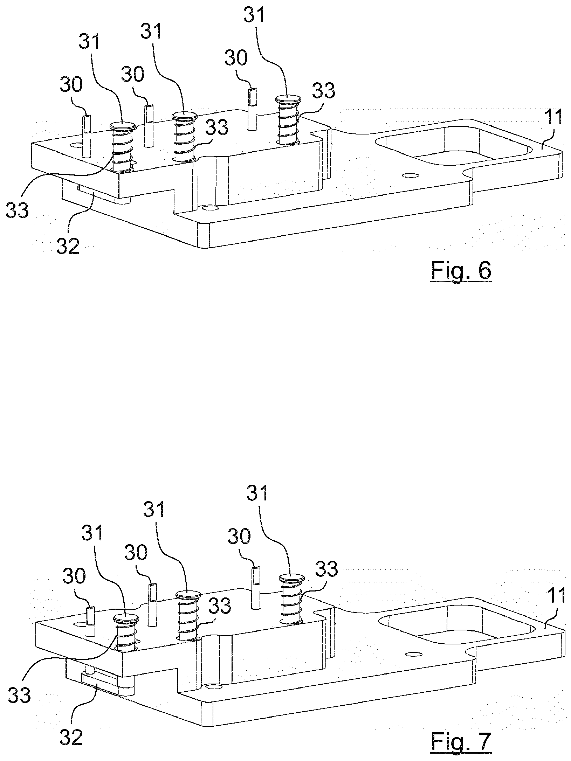

Um die Anschlagelemente 30 im Bedarfsfall aus dem Verschiebeweg der Steckverbinderkomponenten 17 zu bewegen, beispielsweise um die Steckverbinderkomponenten 17 auf die Kabel 3.1, 3.2 aufzuschieben oder für die Steckverbindermontage verfügbar zu machen, können die Anschlagelemente 30 beispielsweise mit Betätigungselementen 31 mechanisch gekoppelt sein. Das Prinzip ist in den Figuren 6 und 7 gut dargestellt. Beispielhaft ist in Figur 7 das vordere Anschlagelement 30 zusammen mit seinem Betätigungselement 31 aus seinem Grundzustand, in dem das Anschlagelement 30 den Verschiebeweg der Steckverbinderkomponente 17 blockiert, in Richtung auf eine Freigabeposition betätigt.

Die Anschlagelemente 30 sind mit den Betätigungselementen 31 über einen jeweiligen Verbindungssteg 32 verbunden. Damit sich die Anschlagelemente 30 in einem kräftefreien Grundzustand stets in dem Verschiebeweg der Steckverbinderkomponenten 17 befinden, sind um die Betätigungselemente 31 entsprechende Druckfederelemente 33 angeordnet.

In den Figuren 8 bis 11 ist ein bevorzugtes Ausführungsbeispiel der Erfindung dargestellt. Die Merkmale des zweiten Ausführungsbeispiels entsprechen in weiten Teilen den Merkmalen des ersten Ausführungsbeispiels, weshalb nachfolgend im Wesentlichen auf die Unterschiede zwischen den Ausführungsbeispielen eingegangen wird. Die einzelnen Merkmale und Merkmalskombinationen sind zwischen den Ausführungsbeispielen außerdem auch austauschbar, sofern dies technisch nicht ausgeschlossen ist.

Das in den Figuren 8 bis 11 dargestellte zweite Ausführungsbeispiel der erfindungsgemäßen Vorrichtung 1 unterscheidet sich von dem ersten Ausführungsbeispiel vornehmlich in der Ausgestaltung des Schwenkmechanismus der Halteelemente 13, 14 und der Fixiereinheit 15.

Die Fixiereinheit 15 ist in dem zweiten Ausführungsbeispiel als pneumatische Fixiereinheit 15 ausgebildet und damit besonders gut automatisierbar. Die Fixiereinheit 15 fixiert die Leitung 3.1, 3.2 vorzugsweise in einem druckluftfreien Zustand und gibt sie in einem mit Druckluft beaufschlagten Zustand für die Entnahme wieder frei. Hierzu ist eine Druckluftankopplungseinheit 34 vorgesehen (vgl. insbesondere Figur 9) die ausgebildet ist, um der Fixiereinheit 15 vorzugsweise ausschließlich an Bearbeitungsplätzen zur vorgesehenen Eingabe und Entnahme der Leitungen Druckluft zuzuführen, beispielsweise wenn sich der Werkstückträger 8 an dem ersten Bearbeitungsmodul 5 befindet. Die Druckluftankopplungseinheit 34 weist zwei Schwenkarme 35 auf die eingerichtet sind, um einen an dem freien Ende des jeweiligen Schwenkarms 35 angeordneten ersten Druckluftverbinder 36 in einen korrespondierenden zweiten Druckluftverbinder 37 einzuführen, der mit der Fixiereinheit 15 pneumatisch verbunden ist.

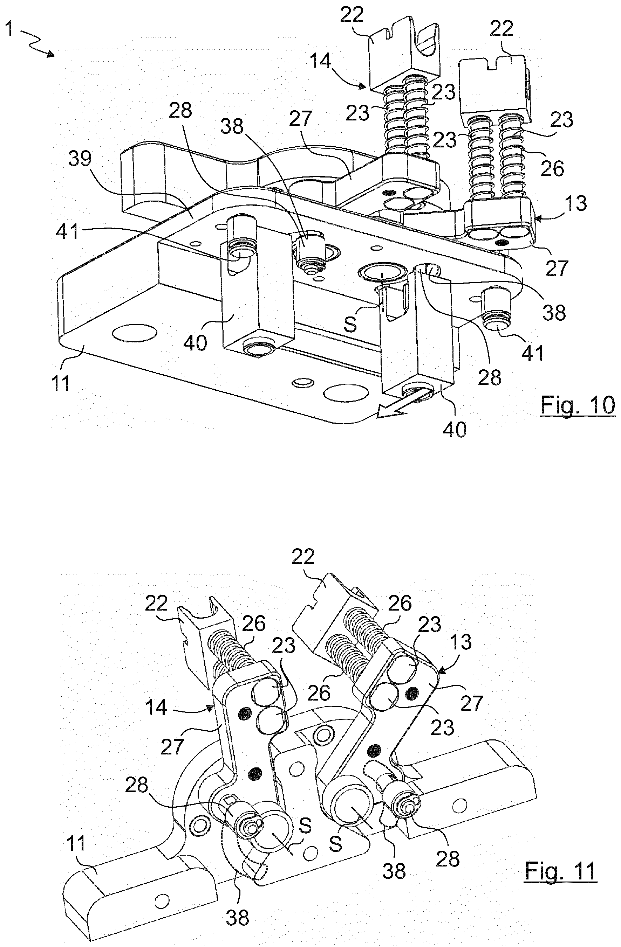

Der Schwenkmechanismus des zweiten Ausführungsbeispiels soll nachfolgend anhand der Figuren 10 und 11 beschrieben werden.

Die Halteelemente 13, 14 sind wiederum um eine jeweilige Schwenkachse S drehbar gelagert und hierzu im Bereich eines ersten Endes eines jeweiligen Auslegers 27 befestigt. Der Ausleger 27 weist einen runden Betätigungsstift 28 auf, um den Ausleger 27 um die Schwenkachse S durch die Aktoreinheit zu verschwenken. Im Gegensatz zu der koaxialen Anordnung ist der Betätigungsstift 28 des zweiten Ausführungsbeispiels allerdings axial zu der Schwenkachse S versetzt angeordnet und in einer Kulisse 38 um die Schwenkachse S herum zwangsgeführt (in Figur 11 nur strichliniert dargestellt). Die Kulisse 38 ist in einer Stützplatte 39 als Aussparung ausgebildet und beschreibt einen Kreisbogen um die Schwenkachse S herum. Die nicht näher dargestellte Aktoreinheit ist ausgebildet, um den axial zu der Schwenkachse S versetzt angeordneten Betätigungsstift 28 linear zu verschieben (vgl. Pfeil in Figur 10), um den Betätigungsstift 28 innerhalb der Kulisse 38 zu bewegen. Hierzu weist die Aktoreinheit entsprechende Transportschieber 40 auf, die für das Verschieben des Betätigungsstiftes 28 mit diesem in Eingriff gebracht werden.

Zur Führung der Stützplatte 39 entlang der Leitungstransportrichtung T sind separate Transportstifte 41 vorgesehen, die in der Führungsnut 29 (vgl. Figur 1 und Figur 8) der Transporteinrichtung 7 geführt sind.

In Figur 8 sind außerdem noch optionale Rastbolzen 42 dargestellt. Die Rastbolzen 42 können verwendet werden, um eines der Betätigungselemente 31 oder um mehrere der Betätigungselemente 31 in ihrem betätigten Zustand zu blockieren. Die Bestückung der Leitung 3.1, 3.2 mit den Steckverbinderkomponenten 17 kann in diesem Fall besonders bedienerfreundlich sein.

Aus Gründen der technischen Sauberkeit kann vorgesehen sein, etwaige Öffnungen / Bohrungen etc. der Vorrichtung 1, beispielsweise des Werkstückträgers 8 oder des Leitungsträgers 11 abzudecken, beispielsweise mit Abdeckkappen zu versehen oder abzukleben.

## Patentansprüche

1. Vorrichtung (1) zur Montage eines Steckverbinders (2) auf jedem vorderen Endabschnitt einer ersten Leitung (3.1) und einer zweiten Leitung (3.2), aufweisend ein erstes Halteelement (13) zum Halten der ersten Leitung (3.1) an einem Halteabschnitt, der dem vorderen Endabschnitt der ersten Leitung (3.1) entlang der Längsachse (L) der ersten Leitung (3.1) in Richtung auf ein hinteres Leitungsende nachgeordnet ist, wobei das erste Halteelement (13) ausgebildet ist, um den vorderen Endabschnitt der ersten Leitung (3.1) zu verschwenken, weiter aufweisend ein zweites Halteelement (14) zum Halten der zweiten Leitung (3.2) an dem Halteabschnitt, der dem vorderen Endabschnitt entlang der Längsachse (L) der zweiten Leitung (3.2) in Richtung auf ein hinteres Leitungsende nachgeordnet ist, wobei das zweite Halteelement (14) ausgebildet ist, um den vorderen Endabschnitt der zweiten Leitung (3.2) zu verschwenken, und wobei beide Leitungen (3.1, 3.2) in entgegengesetzte Richtungen verschwenkbar sein können, um den Abstand der Leitungen (3.1, 3.2) weiter zu erhöhen,
**dadurch gekennzeichnet, dass**
abwechselnd immer genau eine der beiden Leitungen (3.1, 3.2) verschwenkbar ist, während die andere Leitung (3.1, 3.2) nicht verschwenkt ist, um die Zugänglichkeit der verschwenkten und der nicht verschwenkten Leitung (3.1, 3.2) zu verbessern.

2. Vorrichtung (1) nach Anspruch 1,
**dadurch gekennzeichnet, dass**
das erste Halteelement (13) und/oder das zweite Halteelement (14) eine jeweilige Leitungsaufnahme (22) aufweisen die ausgebildet ist, um die entsprechende Leitung (3.1, 3.2) formschlüssig und/oder kraftschlüssig an einem Mantel (18) zu fixieren, wobei die Leitungsaufnahme (22) vorzugsweise an einem ersten Ende eines Führungsstiftes (23) befestigt ist, der orthogonal zu der Längsachse (L) der Leitung (3.1, 3.2) verschiebbar ist.

3. Vorrichtung (1) nach Anspruch 1 oder 2,
**dadurch gekennzeichnet, dass**
das erste Halteelement (13) und/oder das zweite Halteelement (14) zum Aufnehmen der Leitung (3.1, 3.2) auf die Leitung (3.1, 3.2) zustellbar und zum Freigeben der Leitung (3.1, 3.2) von der Leitung (3.1, 3.2) wegbewegbar sind.

4. Vorrichtung (1) nach einem der Ansprüche 1 bis 3,
**dadurch gekennzeichnet, dass**
das erste Halteelement (13) und/oder das zweite Halteelement (14) ausgebildet sind, um den vorderen Endabschnitt in einem Winkelbereich zwischen 0° und 120° zu verschwenken, vorzugsweise in einem Winkelbereich zwischen 20° und 100° zu verschwenken, besonders bevorzugt in einem Winkelbereich zwischen 45° und 90° zu verschwenken.

5. Vorrichtung (1) nach einem der Ansprüche 1 bis 4,
**dadurch gekennzeichnet, dass**
das erste Halteelement (13) und/oder das zweite Halteelement (14) um eine jeweilige Schwenkachse (S) drehbar gelagert sind.

6. Vorrichtung (1) nach Anspruch 5,
**dadurch gekennzeichnet, dass**
das erste Halteelement (13) und/oder das zweite Halteelement (14) im Bereich eines ersten Endes eines jeweiligen Auslegers (27) befestigt sind, wobei der Ausleger (27) im Bereich eines zweiten Endes um die Schwenkachse (S) drehbar gelagert ist.

7. Vorrichtung (1) nach Anspruch 6,
**dadurch gekennzeichnet, dass**
der Ausleger (27) einen Betätigungsstift (28) aufweist der ausgebildet ist, um den Ausleger (27) und damit das jeweilige Halteelement (13, 14) um die Schwenkachse (S) zu verschwenken, wobei der Betätigungsstift (28)
a) koaxial zu der Schwenkachse (S) verlaufenden angeordnet ist; oder
b) axial zu der Schwenkachse (S) versetzt angeordnet und in einer Kulisse (38) um die Schwenkachse (S) herum zwangsgeführt ist.

8. Vorrichtung (1) nach einem der Ansprüche 1 bis 7,
**gekennzeichnet durch**
zumindest eine Aktoreinheit die ausgebildet ist, um das erste Halteelement (13) und/oder das zweite Halteelement (14) zu verschwenken, vorzugsweise mittels des Betätigungsstiftes (28) des Auslegers (27).

9. Vorrichtung (1) nach Anspruch 7 und 8,
**dadurch gekennzeichnet, dass**
die Aktoreinheit ausgebildet ist, um eine Drehbewegung in den koaxial zu der Schwenkachse (S) angeordneten Betätigungsstift (28) einzuleiten.

10. Vorrichtung (1) nach Anspruch 7 und 8,
**dadurch gekennzeichnet, dass**
die Aktoreinheit ausgebildet ist, um den axial zu der Schwenkachse (S) versetzt angeordneten Betätigungsstift (28) linear zu verschieben, um den Betätigungsstift (28) innerhalb der Kulisse (38) zu bewegen.

11. Vorrichtung (1) nach einem der Ansprüche 1 bis 10,
**gekennzeichnet durch**
eine Fixiereinheit (15) zum Fixieren der zumindest einen Leitung (3.1, 3.2) an einem Fixierabschnitt, der dem Halteabschnitt entlang der Längsachse (L) der Leitung (3.1, 3.2) in Richtung auf das hintere Leitungsende nachgeordnet ist, wobei die Fixiereinheit (15) als pneumatische Fixiereinheit (15) ausgebildet ist, und wobei die Fixiereinheit (15) die Leitung (3.1, 3.2) in einem druckluftfreien Zustand fixiert und in einem mit Druckluft beaufschlagten Zustand freigibt.

12. Vorrichtung (1) nach Anspruch 11,
**gekennzeichnet durch**
eine Druckluftankopplungseinheit (34) die ausgebildet ist, um der Fixiereinheit (15) ausschließlich an Bearbeitungsplätzen zur Eingabe und Entnahme der Leitungen (3.1, 3.2) Druckluft zuzuführen, wobei die Druckluftankopplungseinheit (34) wenigstens einen Schwenkarm (35) aufweist der eingerichtet ist, um einen an dem Schwenkarm (35) angeordneten ersten Druckluftverbinder (36) in einen korrespondierenden zweiten Druckluftverbinder (37) einzuführen, der mit der Fixiereinheit (15) pneumatisch verbunden ist.

13. Vorrichtung (1) nach einem der Ansprüche 1 bis 12,
**gekennzeichnet durch**
wenigstens ein Anschlagelement (30), das entlang der zumindest einen Leitung (3.1, 3.2) an einer dem Anschlagelement (30) zugeordneten Anschlagposition angeordnet ist, um den Verschiebeweg von Steckverbinderkomponenten (17) auf der Leitung (3.1, 3.2) formschlüssig zu blockieren, wobei die Anschlagposition dem Halteabschnitt entlang der Längsachse (L) der zumindest einen Leitung (3.1, 3.2) in Richtung auf das hintere Leitungsende nachgeordnet ist, und wobei zumindest eines der Anschlagelemente (30) mit einem Betätigungselement (31) mechanisch gekoppelt ist, um das zumindest eine Anschlagelement (30) durch Betätigen des Betätigungselements (31) aus dem Verschiebeweg der Steckverbinderkomponenten (17) zu bewegen.

14. Vorrichtung (1) nach einem der Ansprüche 1 bis 13,
**gekennzeichnet durch**
eine Transporteinrichtung (7), aufweisend einen Werkstückträger (8) zum Transport der zumindest einen Leitung (3.1, 3.2) zwischen einzelnen Bearbeitungsmodulen (5, 6) und/oder Bearbeitungswerkzeugen entlang einer Leitungstransportrichtung (T), wobei auf dem Werkstückträger (8) ein Leitungsträger (11) befestigt ist, auf dem das erste Halteelement (13), das zweite Halteelement (14), die Fixiereinheit (15) und/oder die Anschlagelemente (30) angeordnet sind, und wobei der Leitungsträger (11) auf dem Werkstückträger (8) entlang einer Zustellrichtung (Z) bewegbar ist, um den vorderen Endabschnitt der zumindest einen Leitung (3.1, 3.2) für die Bearbeitung an wenigstens ein Bearbeitungsmodul (5, 6) und/oder Bearbeitungswerkzeug zuzustellen.

15. Verfahren zur Montage eines Steckverbinders (2) auf jedem vorderen Endabschnitt einer ersten Leitung (3.1) und einer zweiten Leitung (3.2), wonach ein erstes Halteelement (13) die erste Leitung (3.1) an einem Halteabschnitt hält, der dem vorderen Endabschnitt entlang der Längsachse (L) der ersten Leitung (3.1) in Richtung auf ein hinteres Leitungsende nachgeordnet ist, wobei das erste Halteelement (13) den vorderen Endabschnitt der ersten Leitung (3.1) bedarfsweise verschwenkt, und wobei ein zweites Halteelement (14) die zweite Leitung (3.2) an dem Halteabschnitt hält, der dem vorderen Endabschnitt entlang der Längsachse (L) der zweiten Leitung (3.2) in Richtung auf ein hinteres Leitungsende nachgeordnet ist, wobei das zweite Halteelement (14) den vorderen Endabschnitt der zweiten Leitung (3.2) bedarfsweise verschwenkt, und wobei auch beide Leitungen (3.1, 3.2) in entgegengesetzte Richtungen verschwenkbar sein können, um den Abstand der Leitungen (3.1, 3.2) weiter zu erhöhen,
**dadurch gekennzeichnet, dass**
abwechselnd immer genau eine der beiden Leitungen (3.1, 3.2) verschwenkbar ist, während die andere Leitung (3.1, 3.2) nicht verschwenkt ist, um die Zugänglichkeit der verschwenkten und der nicht verschwenkten Leitung (3.1, 3.2) zu verbessern.

## Claims

1. A device (1) for assembling a plug connector (2) on each front end portion of a first line (3.1) and a second line (3.2), having a first holding element (13) for holding the first line (3.1) on a holding portion which is arranged downstream of the front end portion of the first line (3.1) along the longitudinal axis (L) of the first line (3.1) in the direction of a rear line end, wherein the first holding element (13) is configured to pivot the front end portion of the first line (3.1), further comprising a second holding element (14) for holding the second line (3.2) on the holding portion which is arranged downstream of the front end portion along the longitudinal axis (L) of the second line (3.2) in the direction of a rear line end, wherein the second holding element (14) is configured to pivot the front end portion of the second line (3.2), and wherein both lines (3.1, 3.2) can be pivoted in opposing directions to further increase the spacing between the lines (3.1, 3.2),
**characterized in that**
exactly one of the two lines (3.1, 3.2) can be pivoted alternatively, while the other line (3.1, 3.2) is not pivoted, to improve the accessibility of the pivoted and non-pivoted line (3.1, 3.2).

2. The device (1) as claimed in claim 1,
**characterized in that**
the first holding element (13) and/or the second holding element (14) have one respective line receiver (22) which is configured to fix the corresponding line (3.1, 3.2) positively and/or non-positively to a sheath (18), wherein the line receiver (22) is preferably fastened to a first end of a guide pin (23) which can be displaced at right angles relative to the longitudinal axis (L) of the line (3.1, 3.2).

3. The device (1) as claimed in claims 1 or 2,
**characterized in that**
the first holding element (13) and/or the second holding element (14) can be advanced onto the line (3.1, 3.2) for receiving the line (3.1, 3.2) and can be moved away from the line (3.1, 3.2) for releasing the line (3.1, 3.2).

4. The device (1) as claimed in one of claims 1 to 3, **characterized in that**
the first holding element (13) and/or the second holding element (14) are configured to pivot the front end portion in an angular range of between 0° and 120°, preferably in an angular range of between 20° and 100°, particularly preferably in an angular range of between 45° and 90°.

5. The device (1) as claimed in one of claims 1 to 4, **characterized in that**
the first holding element (13) and/or the second holding element (14) are rotatably mounted about one respective pivot axis (S).

6. The device (1) as claimed in claim 5,
**characterized in that**
the first holding element (13) and/or the second holding element (14) are fastened in the region of a first end of one respective extension arm (27), wherein the extension arm (27) is rotatably mounted about the pivot axis (S) in the region of a second end.

7. The device (1) as claimed in claim 6,
**characterized in that**
the extension arm (27) has an actuating pin (28) which is configured to pivot the extension arm (27) and thus the respective holding element (13, 14) about the pivot axis (S), wherein the actuating pin (28)
a) is arranged so as to run coaxially to the pivot axis (S); or
b) is arranged axially offset to the pivot axis (S) and is forcibly guided in a sliding guide (38) about the pivot axis (S).

8. The device (1) as claimed in one of claims 1 to 7, **characterized by**
at least one actuator unit which is configured to pivot the first holding element (13) and/or the second holding element (14), preferably by means of the actuating pin (28) of the extension arm (27).

9. The device (1) as claimed in claim 7 and 8, **characterized in that**
the actuator unit is configured to introduce a rotational movement into the actuating pin (28) which is arranged coaxially to the pivot axis (S).

10. The device (1) as claimed in claim 7 and 8, **characterized in that**
the actuator unit is configured to displace the actuating pin (28), which is arranged axially offset to the pivot axis (S), in a linear manner in order to move the actuating pin (28) inside the sliding guide (38).

11. The device (1) as claimed in one of claims 1 to 10, **characterized by**
a fixing unit (15) for fixing the at least one line (3.1, 3.2) to a fixing portion which is arranged downstream of the holding portion along the longitudinal axis (L) of the line (3.1, 3.2) in the direction of the rear line end, wherein the fixing unit (15) is configured as a pneumatic fixing unit (15), wherein the fixing unit (15) fixes the line (3.1, 3.2) in a state without the application of compressed air and releases the line(s) in a state with the application of compressed air.

12. The device (1) as claimed in claim 11,
**characterized by**
a compressed air coupling unit (34) which is configured to supply compressed air to the fixing unit (15) exclusively at processing stations for introducing and removing the lines (3.1, 3.2), wherein the compressed air coupling unit (34) has at least one pivot arm (35) which is designed to introduce a first compressed air connector (36), which is arranged on the pivot arm (35), into a corresponding second compressed air connector (37), which is pneumatically connected to the fixing unit (15).

13. The device (1) as claimed in one of claims 1 to 12, **characterized by**
at least one stop element (30) which is arranged along the at least one line (3.1, 3.2) at a stop position assigned to the stop element (30) in order to block positively the displacement path of the plug connector components (17) on the line (3.1, 3.2), wherein the stop position is arranged downstream of the holding portion along the longitudinal axis (L) of the at least one line (3.1, 3.2) in the direction of the rear line end, and wherein at least one of the stop elements (30) is mechanically coupled to an actuating element (31) in order to move the at least one stop element (30) out of the displacement path of the plug connector components (17) by actuating the actuating element (31).

14. The device (1) as claimed in one of claims 1 to 13, **characterized by**
a transport apparatus (7) comprising a workpiece carrier (8) for the transport of the at least one line (3.1, 3.2) between individual processing modules (5, 6) and/or processing tools in a line transport direction (T), wherein a line carrier (11) is fastened to the workpiece carrier (8), with the first holding element (13), the second holding element (14), the fixing unit (15) and/or the stop elements (30) being arranged thereon, and wherein the line carrier (11) is movable on the workpiece carrier (8) in an advancing direction (Z) in order to advance the front end portion of the at least one line (3.1, 3.2) onto at least one processing module (5, 6) and/or processing tool for the processing.

15. A method for assembling a plug connector (2) on each front end portion of a first line (3.1) and a second line (3.2), according to which a first holding element (13) holds the first line (3.1) on a holding portion which is arranged downstream of the front end portion along the longitudinal axis (L) of the first line (3.1) in the direction of a rear line end, wherein the first holding element (13) pivots the front end portion of the first line (3.1), as required, and wherein a second holding element (14) holds the second line (3.2) on the holding portion which is arranged downstream of the front end portion along the longitudinal axis (L) of the second line (3.2) in the direction of a rear line end, wherein the second holding element (14) pivots the front end portion of the second line (3.2), as required, and wherein both lines (3.1, 3.2) can be pivoted in opposing directions to further increase the spacing between the lines (3.1, 3.2),
**characterized in that**
exactly one of the two lines (3.1, 3.2) can be pivoted alternatively, while the other line (3.1, 3.2) is not pivoted, to improve the accessibility of the pivoted and non-pivoted line (3.1, 3.2).

## Revendications

1. Dispositif (1) pour monter un connecteur enfichable (2) sur chaque partie d'extrémité avant d'un premier câble (3.1) et d'un deuxième câble (3.2), comprenant un premier élément de retenue (13) pour retenir le premier câble (3.1) au niveau d'une partie de retenue qui est disposée en aval de la partie d'extrémité avant du premier câble (3.1) le long de l'axe longitudinal (L) du premier câble (3.1) en direction d'une extrémité arrière du câble, le premier élément de retenue (13) étant conçu pour faire pivoter la partie d'extrémité avant du premier câble (3.1), comprenant en outre un deuxième élément de retenue (14) destiné à maintenir le deuxième câble (3.2) sur l'élément de retenue qui est disposé en aval de la partie d'extrémité avant le long de l'axe longitudinal (L) du deuxième câble (3.2) en direction d'une extrémité arrière du câble, le deuxième élément de retenue (14) étant conçu pour faire pivoter la partie d'extrémité avant du deuxième câble (3.2), et les deux câbles (3.1, 3.2) pouvant pivoter dans des directions opposées afin d'augmenter encore la distance entre les câbles (3.1, 3.2), **caractérisé en ce que** en alternance, toujours exactement l'un des deux câbles (3.1, 3.2) peut pivoter, tandis que l'autre câble (3.1, 3.2) ne pivote pas, afin d'améliorer l'accessibilité du câble pivoté et du câble non pivoté (3.1, 3.2).

2. Dispositif (1) selon la revendication 1, **caractérisé en ce que** le premier élément de retenue (13) et/ou le deuxième élément de retenue (14) présentent un logement de câble (22) respectif qui est conçu pour fixer le câble correspondant (3.1, 3.2) par emboîtement et/ou par adhérence sur un manchon (18), le logement de câble (22) étant de préférence fixé à une première extrémité d'une tige de guidage (23) qui peut être déplacée orthogonalement à l'axe longitudinal (L) du câble (3.1, 3.2).

3. Dispositif (1) selon la revendication 1 ou 2, **caractérisé en ce que** le premier élément de retenue (13) et/ou le deuxième élément de retenue (14) destinés à recevoir le câble (3.1, 3.2) peuvent être avancés vers le câble (3.1, 3.2) et éloignés du câble (3.1, 3.2) pour libérer le câble (3.1, 3.2).

4. Dispositif (1) selon les revendications 1 à 3, **caractérisé en ce que** le premier élément de retenue (13) et/ou le deuxième élément de retenue (14) sont conçus pour faire pivoter la partie d'extrémité avant dans une plage angulaire comprise entre 0° et 120°, de préférence dans une plage angulaire comprise entre 20° et 100°, de préférence dans une plage angulaire comprise entre 45° et 90°.

5. Dispositif (1) selon les revendications 1 à 4, **caractérisé en ce que** le premier élément de retenue (13) et/ou le deuxième élément de retenue (14) sont montés de manière à pouvoir pivoter autour d'un axe de pivotement (S) respectif.

6. Dispositif (1) selon la revendication 5, **caractérisé en ce que** le premier élément de retenue (13) et/ou le deuxième élément de retenue (14) sont fixés dans la zone d'une première extrémité d'un bras (27) respectif, le bras (27) étant monté de manière pivotante autour de l'axe de pivotement (S) dans la zone d'une deuxième extrémité.

7. Dispositif (1) selon la revendication 6, **caractérisé en ce que** le bras (27) comporte une tige d'actionnement (28) qui est conçue pour faire pivoter le bras (27) et donc l'élément de retenue correspondant (13, 14) autour de l'axe de pivotement (S), la tige d'actionnement (28)
a) étant disposée coaxialement à l'axe de pivotement (S) ; ou
b) étant disposée de manière décalée axialement par rapport à l'axe de pivotement (S) et étant guidée de manière forcée dans une coulisse (38) autour de l'axe de pivotement (S).

8. Dispositif (1) selon l'une des revendications 1 à 7, **caractérisé par** au moins une unité d'actionnement qui est conçue pour faire pivoter le premier élément de retenue (13) et/ou le deuxième élément de retenue (14), de préférence au moyen de la tige d'actionnement (28) du bras (27).

9. Dispositif (1) selon les revendications 7 et 8, **caractérisé en ce que** l'unité d'actionnement est conçue pour initier un mouvement de rotation dans la tige d'actionnement (28) disposée coaxialement à l'axe de pivotement (S).

10. Dispositif (1) selon les revendications 7 et 8, **caractérisé en ce que** l'unité d'actionnement est conçue pour déplacer linéairement la tige d'actionnement (28) décalée axialement par rapport à l'axe de pivotement (S) afin de déplacer la tige d'actionnement (28) à l'intérieur de la coulisse (38).

11. Dispositif (1) selon l'une des revendications 1 à 10, **caractérisé par** une unité de fixation (15) pour fixer au moins un câble (3.1, 3.2) à une unité de fixation qui est disposée en aval de l'élément de retenue le long de l'axe longitudinal (L) du câble (3.1, 3.2) en direction de l'extrémité arrière du câble, l'unité de fixation (15) étant conçue comme une unité de fixation pneumatique (15) et l'unité de fixation (15) fixant le câble (3.1, 3.2) dans un état sans air comprimé et le libérant dans un état sous pression d'air comprimé.

12. Dispositif (1) selon la revendication 11, **caractérisé par** une unité de raccordement à air comprimé (34) qui est conçue pour alimenter en air comprimé l'unité de fixation (15) exclusivement au niveau des postes de travail pour l'introduction et le retrait des câbles (3.1, 3.2), l'unité de raccordement à air comprimé (34) comportant au moins un bras pivotant (35) qui est agencé pour introduire un premier raccord à air comprimé (36) disposé sur le bras pivotant (35) dans un deuxième raccord à air comprimé correspondant (37) relié pneumatiquement à l'unité de fixation (15).

13. Dispositif (1) selon l'une des revendications 1 à 12, **caractérisé par** au moins un élément de butée (30) qui est disposé le long du au moins un câble (3.1, 3.2) dans une position de butée associée à l'élément de butée (30) afin de bloquer par emboîtement le déplacement des composants de raccord rapide (17) sur le câble (3.1, 3.2), la position de butée étant disposée en aval de l'élément de retenue le long de l'axe longitudinal (L) du au moins un câble (3.1, 3.2) en direction de l'extrémité arrière du câble, et au moins l'un des éléments de butée (30) étant couplé mécaniquement à un élément d'actionnement (31) afin de déplacer le ou les éléments de butée (30) hors de la course de déplacement des composants de connecteur enfichable (17) par actionnement de l'élément d'actionnement (31).

14. Dispositif (1) selon l'une des revendications 1 à 13, **caractérisé par** un dispositif de transport (7) comportant un porte-pièce (8) pour transporter au moins un câble (3.1, 3.2) entre différents modules de travail (5, 6) et/ou outils de façonnage le long d'une direction de transport de câbles (T), un support de câble (11) étant fixé sur le porte-pièce (8), sur lequel sont disposés le premier élément de retenue (13), le deuxième élément de retenue (14), l'unité de fixation (15) et/ou les éléments de butée (30), et le support de câble (11) étant mobiles sur le porte-pièce (8) le long d'une direction d'avance (Z) afin d'amener la partie d'extrémité avant du au moins un câble (3.1, 3.2) vers au moins un module de travail (5, 6) et/ou un outil de façonnage pour le façonnage.

15. Procédé de montage d'un connecteur enfichable (2) sur chaque partie d'extrémité avant d'un premier câble (3.1) et d'un deuxième câble (3.2), dans lequel un premier élément de retenue (13) maintient le premier câble (3.1) au niveau d'une partie de retenue qui est disposée en aval de la partie d'extrémité avant le long de l'axe longitudinal (L) du premier câble (3.1) en direction d'une extrémité arrière du câble, le premier élément de retenue (13) faisant pivoter la partie d'extrémité avant du premier câble (3.1) si nécessaire, et un deuxième élément de retenue (14) retenant le deuxième câble (3.2) au niveau de la partie de retenue qui est disposée en aval de la partie d'extrémité avant le long de l'axe longitudinal (L) du deuxième câble (3.2) en direction d'une extrémité arrière du câble, le deuxième élément de retenue (14) faisant pivoter la partie d'extrémité avant du deuxième câble (3.2) si nécessaire, et les deux câbles (3.1, 3.2) pouvant également pivoter dans des directions opposées afin d'augmenter encore la distance entre les câbles (3.1, 3.2), **caractérisé en ce qu'**un seul des deux câbles (3.1, 3.2) peut pivoter à chaque fois, tandis que l'autre câble (3.1, 3.2) n'est pas pivoté, afin d'améliorer l'accessibilité du câble pivotée et du câble non pivoté (3.1, 3.2).
